(19) Europäisches Patentamt
European Patent Office
Office européen des brevets

(11) **EP 3 057 736 B1**

(12) **FASCICULE DE BREVET EUROPEEN**

(45) Date de publication et mention
de la délivrance du brevet:
**10.01.2018 Bulletin 2018/02**

(51) Int Cl.:
**B23K 26/06** *(2014.01)*  **B23K 26/073** *(2006.01)*
**B23K 26/38** *(2014.01)*  **B23K 26/40** *(2014.01)*

(21) Numéro de dépôt: **14796718.6**

(22) Date de dépôt: **16.10.2014**

(86) Numéro de dépôt international:
**PCT/EP2014/072255**

(87) Numéro de publication internationale:
**WO 2015/055779 (23.04.2015 Gazette 2015/16)**

(54) **METHODE ET DISPOSITIF DE MICRO-USINAGE PAR LASER**

VERFAHREN UND VORRICHTUNG ZUR LASERMIKROBEARBEITUNG

METHOD AND DEVICE FOR LASER MICROMACHINING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.10.2013 FR 1360131**

(43) Date de publication de la demande:
**24.08.2016 Bulletin 2016/34**

(73) Titulaire: **Centre National de la Recherche Scientifique (C.N.R.S.) 75794 Paris Cedex 16 (FR)**

(72) Inventeurs:
• **COURVOISIER, François**
  **F-25870 Cussey sur l'Ognon (FR)**
• **LACOURT, Pierre-Ambroise**
  **F-25000 Besançon (FR)**
• **COUAIRON, Arnaud**
  **F-91190 Gif sur Yvette (FR)**

(74) Mandataire: **Osha Liang
2, rue de la Paix
75002 Paris (FR)**

(56) Documents cités:
JP-A- 2004 136 358    JP-A- 2006 272 384
US-A1- 2005 115 939    US-A1- 2009 057 279

## Description

### Domaine technique de l'invention

La présente invention concerne une méthode et un dispositif de micro-usinage par laser, adapté notamment pour le micro-perçage de matériaux pour la micro-électronique.

### Etat de l'art

Différentes techniques sont connues pour le perçage de canaux ou « vias » dans ou à travers des wafers de semi-conducteurs pour la micro et la nanoélectronique et le photovoltaïque.

Ces techniques de perçage comprennent par exemple la focalisation de faisceaux d'ions (procédé dit « ebeam ») ou la photolithographie suivie de gravure réactive profonde (ou DRIE selon l'expression anglo-saxonne « deep reactive ion etching »). La technologie ebeam nécessite un besoin de vide poussé, est adaptée à des trous de diamètres inférieurs à 100 nm et présente une lenteur du perçage. La technologie de photolithographie nécessite la réalisation préalable d'un masque ; elle est donc peu souple et coûteuse.

La demande de brevet publiée JP2006/272384 décrit une méthode pour l'ablation de canaux dans des matériaux, y compris dont des matériaux transparents, en utilisant des processus d'absorption multi-photons.

Dans le domaine de la micro/nano structuration de matériaux diélectriques (par exemple le verre), les inventeurs ont montré que l'utilisation d'un faisceau laser femtoseconde avec un profil spatial "non-diffractant" du type faisceau de Bessel, donne accès au contrôle du dépôt d'énergie dans la profondeur du matériau. Cette technologie permet notamment de réaliser une micro-explosion suffisamment intense et localisée pour évacuer le matériau à ablater (voir par exemple M.K. Bhuyan et al., « High aspect ratio nanochannel machining using single shot femtosecond Bessel beams », Appl. Phys. Lett. 97, 081102 (2010)). Ainsi, une seule impulsion laser permet de créer un nano-trou de très haut rapport de forme (nano-canal). Cette technique est cependant limitée à des trous de diamètres inférieurs à quelques centaines de nanomètres.

Un objet de l'invention est de proposer un dispositif et une méthode de micro-usinage pour le perçage ultra rapide de trous traversant à grands diamètres (supérieurs au micron), applicable notamment au micro-usinage de matériaux transparents en micro-électronique.

### RESUME DE L'INVENTION

Selon un premier aspect, l'invention concerne un dispositif de micro-usinage par laser d'un échantillon en matériau donné, tel que défini dans la revendication 1.

En choisissant les moyens d'émission tels que la première impulsion lumineuse présente une bande spectrale comprise dans la bande de transparence du matériau que l'on cherche à usiner, on limite l'absorption linéaire dans le matériau, permettant ainsi d'usiner le matériau en profondeur grâce à un processus amorcé par l'absorption non linéaire multi-photonique dans l'échantillon.

La bande de transparence du matériau est définie comme le domaine spectral dans lequel le coefficient d'absorption du milieu est inférieur à une valeur donnée, par exemple 0,5 cm$^{-1}$, correspondant à une transmission du milieu supérieure à 60% pour un milieu d'épaisseur 1 cm. La bande spectrale de transparence est ainsi par exemple la bande spectrale au-delà de 1100 nm pour un échantillon en matériau semi-conducteur de type silicium. Elle couvre l'ensemble du spectre visible et infra-rouge pour un matériau diélectrique comme le verre. Autrement dit, la bande spectrale de la première impulsion lumineuse est choisie afin que la transition électronique ne puisse être réalisée que par une transition optique à au moins deux photons.

Les déposants ont montré que le dispositif selon le premier aspect permet notamment, grâce à la génération d'un faisceau non diffractant focalisé selon un cylindre de focalisation, l'usinage de l'échantillon pour former des trous de diamètre important, typiquement supérieur au micron, tout en s'affranchissant de phénomènes de points chauds et de filamentation multiple qui pourraient résulter de la propagation d'un simple faisceau diffractant annulaire.

Un tel faisceau non diffractant est avantageusement un faisceau présentant, dans l'espace des fréquences spatiales $k_r$, une distribution d'intensité annulaire et une phase de type $\Phi(k_r, \theta) = N\theta$, dite « phase Vortex », où $(k_r, \theta)$ sont les coordonnées cylindriques et N est un entier relatif non nul appelé charge topologique du vortex.

Avantageusement, dans l'espace des fréquences spatiales $k_r$, la distribution d'intensité présente un maximum d'intensité pour une fréquence spatiale $k_{r0}$ non nulle et une intensité négligeable (c'est-à-dire inférieure ou égale au vingtième de l'intensité maximale) pour des fréquences spatiales comprises entre $k_r = 0$ et $k_r = k_{r0}/5$.

Selon une variante, un tel faisceau non diffractant, appelé faisceau de Bessel-Vortex, présente dans la zone de focalisation du module de focalisation et à proximité de l'axe optique, une intensité lumineuse I(r) pouvant être décrite de façon approchée par le profil radial $I(r) = |J_N(k_0\,r\,\sin\gamma)|^2$, où r est la coordonnée radiale, $J_N$ est la fonction correspondant à la fonction de Bessel d'ordre N de première espèce et N est la charge topologique du vortex, $k_0$ est le vecteur d'onde à la longueur d'onde centrale du laser $\lambda_0$, $\gamma$ est nommée l'angle conique du faisceau. Le choix des paramètres du faisceau de Bessel-Vortex permet d'ajuster la géométrie du cylindre de focalisation.

Selon une variante, un faisceau Bessel-Vortex est obtenu à partir d'un faisceau laser incident en le faisant traverser successivement une lame de phase vortex appliquant la phase spatiale $\Phi(r, \theta) = N\theta$ puis une lentille de type axicon. Avantageusement, le faisceau laser incident présente une intensité lumineuse sensiblement constante sur la zone d'application de la phase, par exemple un profil d'intensité gaussien. Alternativement, un faisceau Bessel-Vortex peut être obtenu à partir d'un faisceau laser par transmission ou réflexion sur une lame de phase ou un modulateur de phase spatiale.

Selon une variante, le module de focalisation permet la formation de plusieurs faisceaux non diffractant en parallèle pour former une pluralité de cylindres de focalisation dans l'échantillon.

Les moyens d'émission comprennent par exemple une source laser impulsionnelle permettant l'émission de premières impulsions lumineuses de durée inférieure à 100 picosecondes ou de trains de premières impulsions lumineuses.

Selon une variante, la puissance optique d'une première impulsion lumineuse ou d'un train de premières impulsions lumineuses est supérieure à une première puissance optique seuil suffisante pour entraîner une modification des propriétés physico-chimiques du matériau à l'endroit de formation du plasma et/ou à l'intérieur du cylindre de focalisation et/ou à l'extérieur du cylindre de focalisation.

Selon une variante, la puissance optique est supérieure à une deuxième puissance optique seuil suffisante pour entraîner une ablation du matériau à l'endroit de formation du plasma.

Dans l'un ou l'autre de ces cas, l'usinage du matériau peut être réalisé au moyen d'impulsions laser uniques ou au moyen d'un train d'impulsions.

Selon une variante, les moyens d'émission permettent l'émission d'au moins une seconde onde électromagnétique destinée à être superposée spatialement à l'endroit de formation du plasma généré par les premières impulsions lumineuses.

Les déposants ont montré qu'on pouvait en effet limiter les effets non linéaires et notamment les effets Kerr responsables d'inhomogénéité dans la formation du plasma par la mise en forme temporelle des impulsions incidentes dans l'échantillon sous forme de deux impulsions décalées temporellement. Ainsi la première impulsion lumineuse ultra brève, de durée inférieure ou égale à 100 picosecondes et avantageusement de durée inférieure ou égale à 10 picosecondes, permet, après focalisation dans l'échantillon au moyen du module de focalisation, la formation du plasma de charges libres par absorption multi-photonique. La ou les secondes onde(s) électromagnétique(s) dont l'intensité lumineuse est inférieure à celle de la première impulsion, permettent de déposer l'énergie permettant la modification des propriétés physico-chimiques du matériau, voire l'ablation.

Selon une variante, les première et deuxième impulsions sont suffisamment proches temporellement pour que la deuxième impulsion permette un échauffement du matériau par absorption par les charges libres du plasma (première et deuxième impulsions séparées d'un temps inférieure à la durée de vie du plasma, typiquement 1 à 10 ps selon le matériau).

Selon une autre variante, les impulsions laser sont séparées par un délai supérieur à la durée de vie du plasma mais inférieur au temps de relaxation thermique (typiquement 1 à 100 ns selon le matériau).

Selon une variante, la ou lesdites secondes ondes électromagnétiques peuvent être des ondes micro-ondes ou térahertz, la longueur d'onde de ces ondes étant comprise dans le domaine de transparence du matériau que l'on cherche à usiner afin d'éviter toute absorption linéaire. Alternativement, la ou lesdites secondes ondes électromagnétiques sont des ondes lumineuses de longueur d'onde également comprise dans le domaine de transparence du matériau, émises sous forme d'impulsions uniques, par exemple de durée comprise entre quelques fractions de picosecondes et quelques millisecondes ou sous forme d'un train d'impulsions.

Pour la formation desdites première et seconde(s) impulsions lumineuses, il est possible d'utiliser selon une variante deux sources laser distinctes synchronisées.

Alternativement, lesdits premier et second moyens d'émission sont formés par une source d'émission d'une impulsion laser unique et comprennent un module de mise en forme temporelle permettant de générer à partir de l'onde lumineuse émise par ladite source laser les première et seconde(s) impulsions lumineuses.

Avantageusement, le dispositif selon le premier aspect comprend en outre un module de balayage permettant le mouvement relatif entre le faisceau non diffractant et l'échantillon.

Selon une variante, le dispositif comprend en outre un module de mise en forme de la polarisation des impulsions émises par les moyens d'émission.

Selon une variante, le dispositif comprend en outre des moyens d'évacuation du matériau contenu à l'intérieur du cylindre de focalisation.

Selon un second aspect, l'invention concerne une méthode de micro-usinage par laser d'un échantillon en matériau présentant une bande de transparence donnée, telle que définie dans la revendication 11, la méthode pouvant s'appliquer au micro-perçage, ou plus généralement, à l'induction de contraintes dans le matériau, par exemple pour le clivage.

La méthode selon le premier aspect comprend:

- l'émission d'au moins une première impulsion de bande spectrale comprise dans la bande de transparence dudit matériau;

- la mise en forme spatiale de ladite première impulsion permettant de former après focalisation dans ledit échantillon un faisceau non diffractant focalisé selon un cylindre de focalisation, l'intensité lumineuse dudit faisceau non diffractant permettant de générer un plasma de charges libres par absorption multi-photonique dans un volume de l'échantillon situé sur la surface latérale dudit cylindre de focalisation.

Selon une variante, la méthode comprend l'émission d'une première impulsion lumineuse ou d'un train de premières impulsions lumineuses de puissance optique suffisante pour entraîner une modification des propriétés physico-chimiques du matériau à l'endroit de formation du plasma et/ou à l'intérieur du cylindre de focalisation et/ou à l'extérieur du cylindre de focalisation. Selon une variante, la puissance optique est suffisante pour entraîner l'ablation du matériau à l'endroit de formation du plasma.

Selon une variante, la méthode comprend l'émission d'au moins une seconde onde électromagnétique de bande spectrale comprise dans la bande de transparence dudit matériau, superposée spatialement à l'endroit de formation du plasma.

Selon une variante, la mise en forme spatiale de ladite première impulsion comprend une modulation spatiale de l'amplitude de ladite impulsion afin de rendre l'intensité lumineuse de ladite première impulsion sensiblement constante sur le cylindre de focalisation.

La méthode ainsi décrite présente de nombreuses applications.

Par exemple, la méthode selon le deuxième aspect peut être appliquée au micro-perçage d'un échantillon en matériau donné pour la formation d'au moins un trou traversant.

La méthode comprend alors selon des variantes :

- le contrôle du diamètre du trou traversant par le contrôle des paramètres de mise en forme spatiale de la première impulsion lumineuse, et/ou

- le contrôle de la position relative de l'échantillon et du faisceau non-diffractant, et/ou

- la superposition de faisceaux de Bessel-Vortex concentriques et de charges topologiques différentes.

Selon une variante, la méthode comprend en outre l'évacuation du matériau contenu à l'intérieur du cylindre de focalisation pour former ledit trou traversant, par exemple par des moyens chimiques, ultrasonores ou mécaniques (e.g. jet d'air ou de liquide).

La méthode selon le deuxième aspect peut également être appliquée selon une variante au clivage d'un échantillon par induction d'une zone de contrainte au sein du matériau.

La méthode selon le deuxième aspect peut également être appliquée selon une variante au perçage de trous de très grand diamètre (typiquement supérieure à quelques dizaines de microns) par « fraisage ». Dans ce cas, la méthode comprend par exemple le déplacement du cylindre de focalisation autour de la zone à évider.

La méthode décrite dans la présente demande s'applique aux matériaux diélectriques, par exemple les verres, la silice fondue, le quartz, le niobate de lithium, le diamant, ainsi qu'aux matériaux semi-conducteurs.

BREVE DESCRIPTION DES DESSINS

D'autres avantages et caractéristiques de l'invention apparaîtront à la lecture de la description, illustrée par les figures suivantes :

- Figure 1, un schéma illustrant selon un exemple la méthode de micro-usinage selon l'invention ;

- Figure 2, une courbe montrant la distribution des fréquences spatiales d'un faisceau de Bessel-Vortex selon un exemple ;

- Figure 3, un schéma illustrant la génération d'un faisceau de Bessel-Vortex à partir d'un faisceau gaussien, selon un exemple de réalisation ;

- Figures 4A et 4B, des images montrant la répartition spatiale d'un faisceau de Bessel-Vortex, selon un profil longitudinal (4A) et un profil transverse (4B), dans un premier exemple de réalisation;

- Figure 5, une image montrant la répartition spatiale d'un faisceau de Bessel-Vortex, selon un profil longitudinal, dans un deuxième exemple de réalisation.

- Figure 6, un schéma montrant un dispositif selon la présente description avec un exemple de module de mise en forme spatiale;

- Figures 7A, 7B, des schémas montrant deux dispositifs selon la présente description, avec des exemples particuliers de modules de mise en forme temporelle ;

- Figures 8A à 8E, des schémas illustrant une pièce à usiner à différentes étapes de mise en oeuvre d'une variante de la méthode selon la présente description, appliquée au micro-perçage ;

- Figures 9A à 9C, des schémas illustrant des variantes de la méthode selon la présente description, appliquée au micro-perçage dans une pièce de plus ou moins grande épaisseur ;

- Figures 10A et 10B, des schémas illustrant une pièce à usiner à différentes étapes de mise en oeuvre d'une variante de la méthode selon la présente description, appliquée au clivage ;

- Figure 11, un schéma illustrant une variante de la méthode selon la présente description, appliquée au micro-perçage de trous de grands diamètres.

DESCRIPTION DETAILLEE

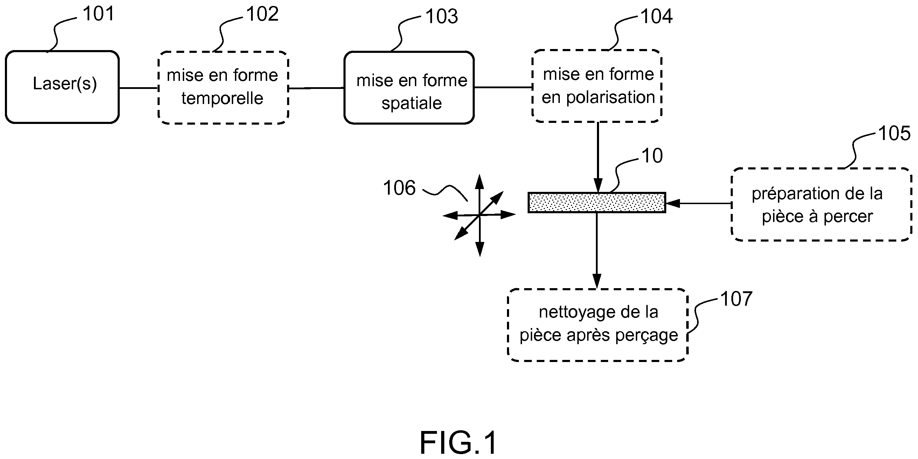

La figure 1 illustre par un schéma un premier exemple de méthode de micro-usinage selon la présente description, appliquée au perçage dans un échantillon.

Selon cet exemple, la méthode de micro-usinage comprend l'émission 101 d'un faisceau par une source laser impulsionnelle, et la focalisation du faisceau sur un échantillon 10 à percer, après une étape de mise en forme temporelle 102 (optionnelle), une étape de mise en forme spatiale 103 et une étape de mise en forme en polarisation 104 (optionnelle) qui seront décrites plus en détail ci-dessous. Le balayage du faisceau et la translation/rotation (symbolisé par les flèches 106) de l'échantillon peuvent permettre de réaliser un mouvement relatif entre le faisceau et l'échantillon pour réaliser séquentiellement plusieurs perçages sur un même échantillon. Selon une variante, comme cela sera décrit plus en détail ci-après, la pièce à percer peut être préparée avant l'opération de perçage (étape 105) et un nettoyage de la pièce après perçage (étape 107) peut également être effectué pour supprimer la matière ablatée.

La mise en forme spatiale 103 du faisceau incident permet de former après focalisation un faisceau non diffractant formant un cylindre de focalisation dans l'échantillon, c'est-à-dire un faisceau possédant la propriété de garder un profil constant le long de l'axe de propagation sur un cylindre de focalisation de dimension donnée, d'où le nom de « non diffractant ». Un tel faisceau présente un maximum d'intensité lumineuse sur la surface du cylindre de focalisation.

Un faisceau non diffractant selon la présente description présente, de façon générale, une distribution d'intensité annulaire dans le domaine des fréquences spatiales avec un maximum d'intensité pour une fréquence spatiale $k_{r0}$ non nulle et une intensité négligeable, typiquement inférieure ou égale au vingtième de l'intensité maximale, pour des fréquences spatiales comprises autour de la fréquence spatiale nulle, par exemple entre $k_r = 0$ et $k_r = k_{r0}/5$. Il présente en outre une phase spectrale ou spatiale du type $\Phi(r,\theta) = N\theta$ où $(r,\theta)$ sont les coordonnées cylindriques, et N, un entier relatif non nul, appelé charge topologique du vortex.

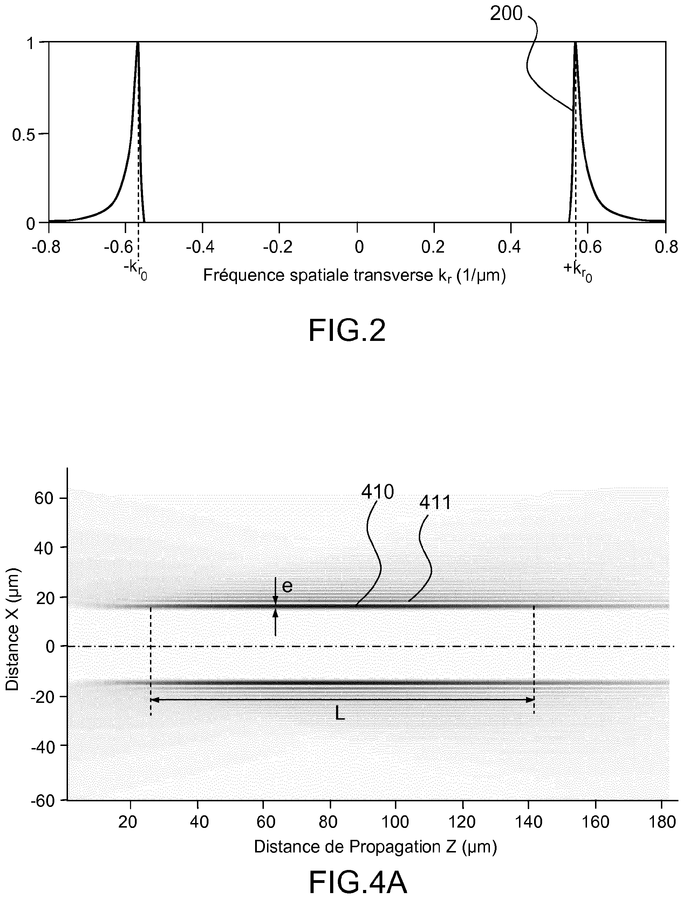

La figure 2 montre ainsi un exemple de distribution d'intensité 200 dans le domaine des fréquences spatiales. Dans cet espace $(k_x, k_y)$, la distribution peut être annulaire, avec un profil radial $(I(k_r))$ présentant une forme de gaussienne centrée en $k_{r0} = \dfrac{2\pi}{\lambda_0}\sin\gamma$ , ou une distribution plus piquée, comme cela est illustré sur la figure 2. Une telle distribution génère un faisceau d'angle conique $\gamma$ à la longueur d'onde centrale du laser $\lambda_0$. De tels faisceaux non diffractant sont par exemple décrits dans V. Jarutis et al. (« Focusing of Laguerre-Gaussian beams by axicon », Optics Communication 184 (2000) 105 - 112).

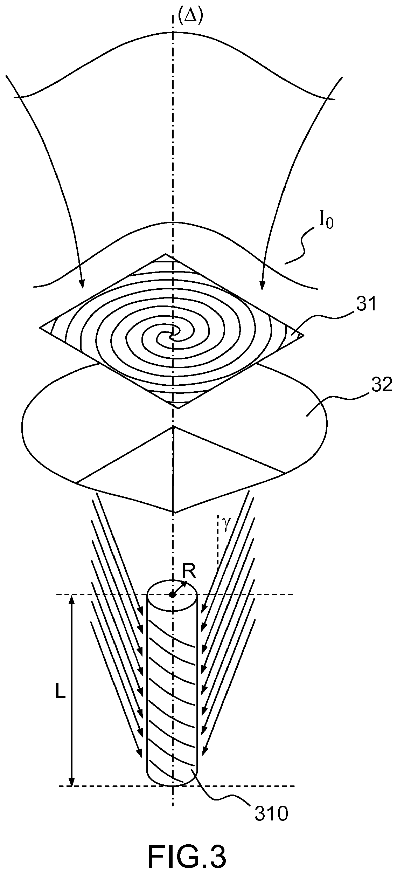

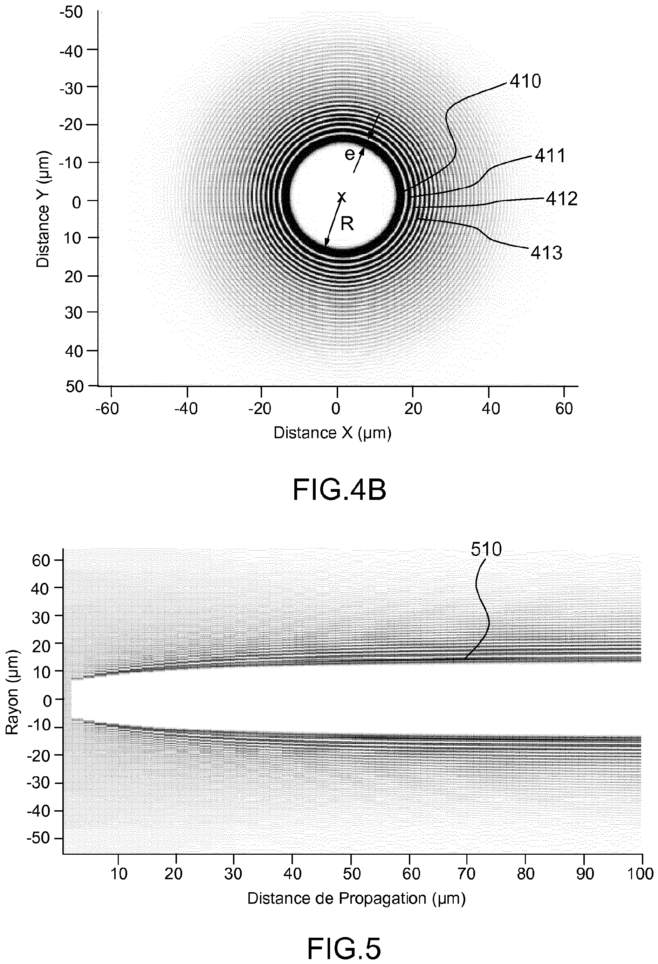

La figure 3 illustre selon un exemple une méthode de génération d'un faisceau de type Bessel-Vortex à partir d'un faisceau incident $I_0$, par exemple un faisceau gaussien ou un faisceau « top hat » à profil d'intensité plat sur un disque de rayon donné, et les figures 4A et 4B illustrent selon un premier exemple, la distribution spatiale d'intensité d'un faisceau de type Bessel-vortex se propageant selon un axe Z, respectivement selon une coupe longitudinale (X, Z) et selon une section transverse (X, Y) du faisceau.

Dans l'exemple illustré sur la figure 3, un faisceau incident $I_0$ passe dans une lame de phase 31 dite « lame de phase Vortex » permettant d'appliquer une phase $\Phi(r,\theta) = N\theta$ puis dans une optique 32 de type axicon, ou, plus généralement, tout type d'élément permettant d'appliquer une phase spatiale de type $\Phi(r) = \beta r$ (en coordonnées cylindriques) afin d'obtenir une distribution d'intensité annulaire schématisée sur la figure 3 par le cylindre 310. Comme cela est illustré sur les figures 4A et 4B, la distribution d'intensité du faisceau ainsi obtenu présente une intensité nulle le long de l'axe de propagation et une distribution d'intensité avec un maximum sur une région annulaire 410. Autour de ce lobe principal, des lobes secondaires (411 - 413) ont une intensité plus faible. Le faisceau est caractérisé notamment par la longueur de propagation L, un rayon R de la zone sombre centrale (c'est-à-dire le rayon du cylindre de focalisation 310) et une épaisseur e du lobe principal. La longueur de propagation L est par exemple définie comme la longueur du cylindre de focalisation pour laquelle l'intensité lumineuse reste supérieure ou égale à la moitié de l'intensité lumineuse maximale. Le long de la propagation, la région annulaire du maximum d'intensité varie peu, de sorte qu'en définissant le rapport d'aspect du faisceau non diffractant obtenu par le rapport entre la longueur de propagation et l'épaisseur à mi-hauteur du lobe principal 410, le rapport d'aspect est supérieur ou égal à 5. Les caractéristiques du faisceau de Bessel-Vortex peuvent être ajustées de façon indépendante en choisissant les paramètres des éléments permettant la génération du faisceau de Bessel-Vortex, et notamment la charge topologique N du vortex, le « waist » du faisceau gaussien incident sur le système de mise en forme (où le waist est défini par le rayon du faisceau pour lequel l'intensité est égale à $I_{max}/e^2$ où $I_{max}$ est l'intensité lumineuse maximale), et l'angle conique $\gamma$ des faisceaux de Bessel. Par exemple, en augmentant la charge topologique N, on augmente le diamètre du cylindre de focalisation. L'épaisseur du lobe principal du cylindre de focalisation diminue lorsque l'angle conique $\gamma$ augmente ou de façon équivalente lorsque le pic d'intensité dans l'espace de Fourier se déplace vers les plus hautes valeurs de $k_r$. Lorsque le waist du faisceau gaussien initial est augmenté, ou de façon équivalente, lorsque la largeur de la distribution initiale d'intensité est augmentée, la longueur de propagation L augmente.

Selon une variante, un seul élément de mise en forme spatiale pourra être utilisé pour appliquer la mise en forme annulaire et la mise en forme vortex.

Les faisceaux Bessel-Vortex possèdent plusieurs particularités mises à profit dans le dispositif et la méthode selon la présente description.

La propagation non-linéaire dans la matière de les faisceaux non-diffractants et notamment les faisceaux de type Bessel-Vortex est quasi stationnaire. Ceci signifie que même à haute intensité, ces faisceaux subissent peu de déformation spatiale et temporelle. Ceci est en fort contraste avec la propagation des faisceaux gaussiens, qui sont déformés à haute intensité en raison de l'effet Kerr (auto focalisation) et de l'interaction avec le plasma d'électrons libres généré par l'impulsion laser dans le matériau.

Avantageusement, les déposants ont montré qu'une excellente stationnarité des faisceaux de type Bessel-Vortex est obtenue pour un angle conique suffisamment grand, de préférence supérieur à environ 10 °.

Enfin, des variantes des faisceaux de type Bessel vortex peuvent être réalisées, en appliquant une légère déformation supplémentaire au front d'onde. Par exemple, le diamètre de la zone 'sombre' centrale peut diminuer ou augmenter le long de la propagation, tout en maintenant la propriété de quasi-stationnarité non-linéaire du faisceau, comme cela est illustré sur la figure 5. Cette déformation peut être réalisée par simple désalignement longitudinal d'une optique de focalisation dans un système afocal. Cette déformation peut également être obtenue par l'ajout d'un terme quadratique du type $\Phi = ar^2$ sur un masque ou une lame de phase.

Grâce à la mise en forme spatiale des impulsions mises en oeuvre dans la présente description, il est ainsi possible avec des intensités lumineuses très fortes (par exemple en utilisant des impulsions femtoseconde), d'induire une nano-explosion au sein du matériau au moyen d'une impulsion laser unique, et de générer un vide cylindrique. Le matériau n'est ainsi vaporisé que sur la surface latérale du cylindre. Le matériau restant à l'intérieur de ce cylindre peut être évacué par la force de gravité ou en utilisant d'autres méthodes, par exemple par un nettoyage ultrasonore.

Il est également possible d'opérer sous le seuil d'ablation ; le matériau subit alors une modification de ses propriétés physiques et/ou chimiques due à l'impulsion laser, puis une étape d'attaque chimique sélective (par exemple par l'acide fluorhydrique ou l'hydroxyde de potassium pour le cas des verres de silice) permet de générer l'ablation proprement dite.

Ainsi, le perçage de canaux de dimensions de l'ordre de quelques dizaines de micromètres de diamètre sur quelques dizaines de micromètres de profondeur est réalisable à l'aide d'une seule impulsion laser, ce qui rend la technique extrêmement attractive en termes de rapidité d'exécution.

Selon une variante représentée sur la figure 1, une étape de mise en forme temporelle 102 permet, à partir d'une source laser unique, de générer une première et une seconde impulsion lumineuse de bandes spectrales comprises dans la bande de transparence du matériau dont est formé l'échantillon. La première impulsion est de courte durée, par exemple inférieure à 100 picosecondes, avantageusement inférieure à 10 picosecondes et de préférence de l'ordre de quelques fractions de picosecondes et permet la formation d'un plasma de charges libres à l'endroit du cylindre de focalisation, par absorption multi-photonique. La deuxième impulsion, plus longue, voire continue, permet de déposer la majeure partie de l'énergie permettant l'ablation laser. La deuxième impulsion peut être synchronisée avec la première afin de permettre que l'excitation produite par la première impulsion soit encore active au moment de l'arrivée de la deuxième impulsion (typiquement, cette excitation dure entre 0.1 et 5 picosecondes, selon les matériaux). La deuxième impulsion dans le cas où son intensité est suffisante, peut aussi amplifier l'effet de densité de plasma par effet d'avalanche d'ionisation. La deuxième impulsion peut être produite pendant la durée de vie du plasma de telle sorte à exciter les charges libres du plasma et contribuer à l'échauffement du matériau. La deuxième impulsion peut également être produite après un délai plus long, mais inférieur au temps de relaxation thermique, soit typiquement inférieur à 100 ns.

La mise en forme temporelle du faisceau incident sous la forme de deux impulsions de durées et de longueur d'onde appropriées permet ainsi de réaliser une excitation à faible énergie et de minimiser de ce fait les effets non-linéaires lors de la propagation dans le matériau, puis de déposer la densité d'énergie nécessaire à l'échauffement du matériau pour l'endommagement ou l'ablation grâce à la deuxième impulsion de durée plus longue.

Alternativement à l'utilisation d'une source laser unique et d'un module de mise en forme temporelle, deux sources laser distinctes peuvent être utilisées pour générer les première et seconde impulsions. Par ailleurs, le dépôt de l'énergie peut se faire au moyen d'une onde électromagnétique qui n'est pas une onde lumineuse, par exemple une onde de type micro-onde ou térahertz, tant que la bande spectrale de l'onde électromagnétique est comprise dans le domaine de transparence du matériau et peut être absorbée par les charges libres du plasma formé par la première impulsion. Alternativement, le dépôt d'énergie peut se faire par un train d'impulsions courtes et rapprochées.

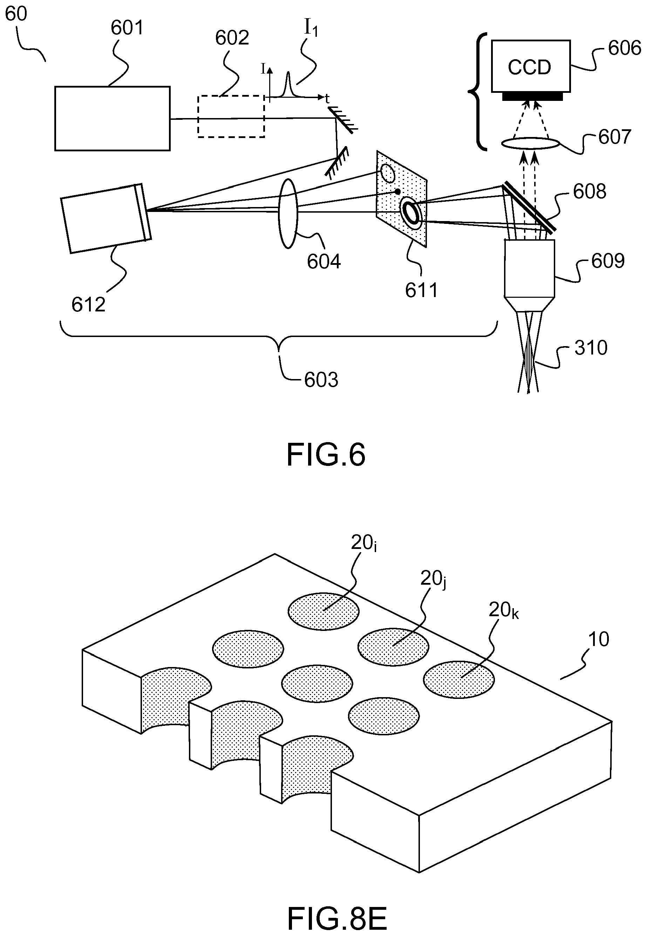

La figure 6 illustre selon un exemple de réalisation un dispositif 60 de micro-usinage selon la présente description, et montre plus particulièrement un exemple de module de focalisation.

Le dispositif 60 comprend dans cet exemple une source laser 601 adaptée à l'émission de premières impulsions ultra courtes notées $I_1$. De façon optionnelle, un module de mise en forme temporelle 602 peut permettre de générer des première et seconde impulsions lumineuses, comme cela a été décrit précédemment et sera détaillé par la suite.

Le dispositif comprend en outre un module de focalisation 603 pour la mise en forme spatiale des impulsions dans l'échantillon, permettant de générer à partir d'un faisceau incident donné un faisceau non diffractant 310 dans l'échantillon selon un cylindre de focalisation. Le faisceau non diffractant est par exemple de type Bessel-vortex. Le cylindre de focalisation est généralement orienté selon un axe optique du module de focalisation. Dans le cas de deux impulsions lumineuses formées par le module de mise en forme temporelle, les deux impulsions traversent avantageusement le même module 603, ce qui permet de faciliter la superposition spatiale des impulsions dans l'échantillon.

Dans l'exemple de la figure 6, le module de focalisation 603 comprend un système optique 612 apte à générer le faisceau non diffractant par exemple de type Bessel-Vortex tel que décrit précédemment, puis un système imageur (604, 609) pour la réduction de la taille du faisceau dans l'échantillon.

Comme expliqué précédemment, la mise en forme spatiale du faisceau comprend deux aspects. D'une part, il s'agit de créer une distribution d'intensité annulaire dans le domaine des fréquences spatiales, et d'autre part, d'appliquer une phase de type vortex au(x) faisceau(x). Ces deux mises en forme peuvent être réalisées indépendamment ou de façon conjointe par un même élément optique.

Les éléments optiques permettant de réaliser la mise en forme de type vortex sont par exemple un hologramme de phase en réflexion ou en transmission, un hologramme d'intensité (binaire en particulier) en réflexion ou en transmission, un modulateur de phase spatiale, une lame de verre dans laquelle une distribution d'anisotropie est photo-inscrite (voir par exemple M. Beresna et al. « Polarization sensitive elements fabricated by femtosecond laser nanostructuring of glass », Optical Material Express Vol. 1 N° 4 (2011)).

Pour réaliser une distribution d'intensité annulaire, les éléments décrits ci-dessus peuvent tous être utilisés pour appliquer une phase spatiale de type $\Phi(r) = \beta r$ (en coordonnées cylindriques). Dans le même but, il est de plus possible d'utiliser un axicon, ou un miroir percé en son centre. Avantageusement, on utilisera un seul élément de mise en forme spatiale pour appliquer la mise en forme annulaire et la mise en forme vortex.

Par ailleurs, il est avantageux de pouvoir réaliser ces faisceaux, avec des caractéristiques identiques ou légèrement différentes, en parallèle. Ceci peut être réalisé grâce à des matrices de structures holographiques, ou à des matrices de micro-axicons en particulier.

Selon une variante, le dispositif 60 peut comprendre en outre un module de mise en forme en polarisation du faisceau non diffractant. En particulier, la polarisation circulaire permet d'obtenir un dommage homogène quel que soit le point du faisceau. Des bénéfices en termes d'efficacité d'ionisation peuvent également être tirés d'une polarisation radiale ou ortho radiale.

Le système imageur est par exemple un système de type "télescopique" ou "4f", afin de ne pas introduire de distorsion de phase quadratique, et comprend par exemple une optique 604 et un objectif de microscope 609. Dans l'exemple de la figure 6, l'objectif de microscope 609 permet de fortement réduire la taille des faisceaux dans l'échantillon. Avantageusement, l'objectif de microscope permet aussi de former une image de l'échantillon à usiner sur une caméra 606 devant laquelle un objectif de focalisation 607 est agencé afin de repérer la zone de l'échantillon que l'on veut usiner et assurer le positionnement vis-à-vis du faisceau.

Dans l'exemple de la figure 6, un filtre spatial 611 positionné dans le plan focal de l'optique 604 permet le filtrage spatial des figures de diffraction formées par le système optique 612 pour ne sélectionner que les fréquences spatiales correspondant au faisceau non diffractant d'intérêt.

Selon une variante, la mise en forme spatiale peut comprendre la modulation d'amplitude permettant d'ajuster l'intensité des faisceaux sur l'axe de propagation, en particulier pour la rendre la plus uniforme possible. Cette modulation d'amplitude peut être réalisée soit par un système de modulation spécifique du module de focalisation, par exemple une matrice de miroirs ou un modulateur de phase, ou il peut être intégré au système de modulation existant lorsqu'un tel système de modulation est déjà utilisé pour former le faisceau non diffractant. Dans ce cas, une partie de l'énergie peut être déviée vers un ordre de diffraction qui sera filtré spatialement, par exemple au moyen du filtre spatial 611 décrit sur la figure 6.

Afin de réduire les temps de déplacement entre un site d'ablation et un autre, il peut être avantageux d'utiliser un système de déplacement du faisceau laser, comme un système de type miroirs galvanométriques 608 ou un système de lames tournantes à face non parallèles.

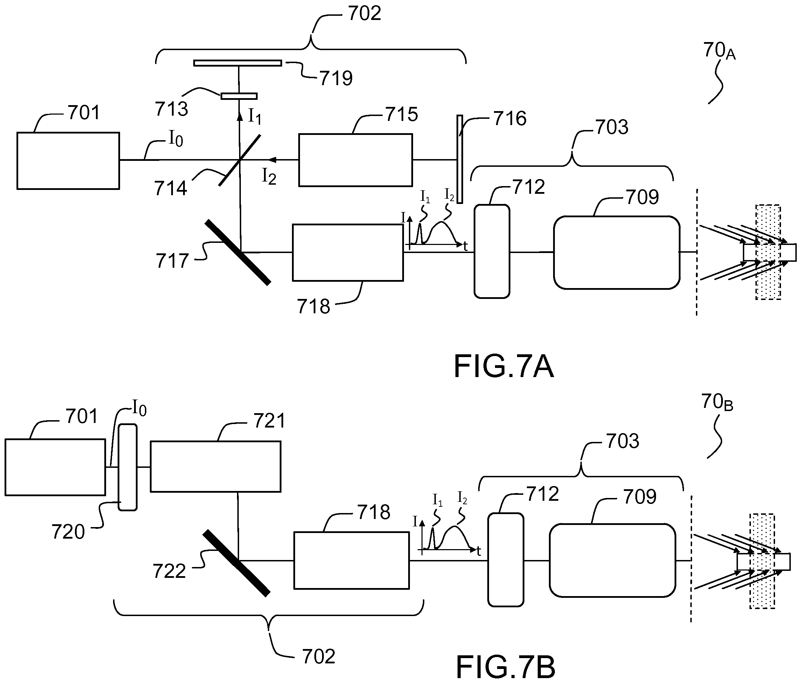

Les figures 7A, 7B illustrent deux exemples de mise en oeuvre d'un module de mise en forme temporelle dans des exemples $70_A$ et $70_B$ de dispositif de micro-usinage selon l'invention, visant à former des premières et secondes impulsions lumineuses telles que décrits précédemment.

Chacun des dispositifs $70_A$ et $70_B$ comprend une source laser 701 et un module de mise en forme temporelle 702 permettant de générer lesdites première et seconde impulsions lumineuses $I_1$ et $I_2$. Le dispositif comprend en outre un module de focalisation 703 pour la mise en forme spatiale du faisceau permettant de générer à partir d'un faisceau incident donné un faisceau non diffractant 310, par exemple de type Bessel-vortex, comme il a été décrit précédemment. Par exemple, le module de focalisation comprend un système optique 712 apte à générer le faisceau non diffractant et un bloc optique 709 comprenant un télescope pour la réduction de faisceau et un ensemble de miroirs pour la déflexion et le balayage. Dans les exemples des figures 7A et 7B, un module de conversion de fréquence 718 permet d'adapter la longueur d'onde des impulsions à la bande de transparence du matériau à usiner. Pour le cas du silicium par exemple, une longueur d'onde de 1550 nm sera choisie de préférence. Un faisceau ultra-bref à cette longueur d'onde peut être obtenu par exemple grâce à un laser 701 centré à 800 nm (par exemple par technologie Titane:Saphir) ou 1030 nm à 1064 nm (par exemple par technologie Ytterbium) en technologie fibrée ou non, injecté dans le système de conversion de fréquence 718, ce dernier pouvant être un amplificateur paramétrique optique (OPA) ou un oscillateur paramétrique optique (OPO). Le module de conversion de fréquence peut être agencé en aval du module de mise en forme temporelle 702, la mise en forme temporelle pouvant être plus facilement réalisée à des longueurs d'onde plus courtes.

La figure 7A illustre un premier exemple de module 702 de mise en forme temporelle. Dans cet exemple, une impulsion $I_0$ émise par la source laser 701 est divisée en deux au moyen d'une lame séparatrice 714. Une première impulsion $I_1$ est réfléchie par un miroir 719 puis envoyée sur le module de conversion de fréquence 718 au moyen d'une lame de déflexion 717. Un atténuateur 713 permet d'adapter l'intensité lumineuse de l'impulsion $I_1$ en fonction de la nature de l'échantillon 705 que l'on cherche à usiner. Une deuxième impulsion est étirée temporellement par des moyens 715 connus de l'état de l'art des technologies femtoseconde, par exemple un système à réseaux, à prisme ou un cristal acousto-optique pour former l'impulsion $I_2$. Cette impulsion est ensuite dirigée vers le module de conversion de fréquence 718 de la même manière.

La figure 7B illustre un second exemple de module 702 de mise en forme temporelle. Dans cet exemple, l'impulsion $I_0$ est divisée en deux impulsions et étirée temporellement grâce à un système acousto-optique 721 de type DAZZLER® (entreprise FASTLITE®). Un obturateur 720 commandé électroniquement permet de sélectionner une impulsion parmi un train d'impulsions, lorsqu'on travaille avec des sources laser à forte cadence par exemple.

Alternativement aux dispositifs $70_A$ et $70_B$ représentés sur les figures 7A et 7B, deux sources laser synchronisées distinctes peuvent être utilisées. Les deux impulsions présentent des bandes spectrales comprises dans la bande de transparence du matériau à usiner. Dans ce cas, il n'est pas nécessaire d'utiliser un moyen d'étirement temporel du faisceau.

Selon une variante, la durée et l'énergie de la deuxième impulsion sont ajustées de sorte à ne produire aucun effet si la deuxième impulsion est appliquée seule dans le matériau. Dans ce cas, la synchronisation des impulsions est un paramètre plus flexible. La deuxième impulsion peut être envoyée avant la première impulsion. L'énergie déposée dans le matériau est alors proportionnelle à la différence temporelle entre la fin de la deuxième impulsion et le début de la première impulsion. En particulier, cette approche permet de réduire les contraintes sur la précision de la synchronisation lorsque la durée de la deuxième impulsion est grande devant celle de la première impulsion.

Selon une variante, le dispositif de nano-usinage selon l'invention comprend un obturateur commandé électroniquement permettant de sélectionner une ou plusieurs impulsions parmi le train d'impulsion émis par le(s) laser(s). L'obturateur peut être mécanique ou optique. Dans ce dernier cas, il s'agit par exemple d'une cellule de pockels suivie d'un polariseur.

Alternativement, la mise en forme temporelle comprend la génération d'un train d'impulsions, la première des impulsions, ultra brève, permettant la génération dans l'échantillon du plasma de charges libres au niveau du cylindre de focalisation obtenu par absorption multi-photonique grâce au module de focalisation et les impulsions subséquentes permettant le dépôt de l'énergie. La durée de la première impulsion est par exemple inférieure à 10 ps. Les secondes impulsions peuvent être plus ou moins courtes mais de faible intensité chacune. Ainsi, il est possible d'utiliser un train de secondes impulsions ultra brèves pour le dépôt de l'énergie et la génération de l'échauffement du matériau par absorption par les charges libres du plasma, typiquement de durée inférieure à 10 ps, par exemple de durée inférieure à la durée de vie du plasma de charges libres dans le matériau (soit environ 100 fs dans le verre). Les impulsions sont resserrées temporellement, par exemple l'écart temporel entre les impulsions est inférieur à 10 ps. L'intensité desdites impulsions est suffisamment faible pour éviter la déstabilisation de faisceau par effet non linéaire de type Kerr. Par contre, l'intensité peut être suffisante pour contribuer à la génération de charges libres et amplifier la densité de plasma. La génération d'un train d'impulsions peut être obtenue par les moyens décrits en référence aux figures 7A, 7B, notamment avec un DAZZLER®, ou plusieurs lignes à retard. Alternativement, il est également possible d'imprimer spectralement, par exemple au moyen d'un DAZZLER®, une phase du troisième ordre, ce qui donne temporellement un faisceau de type Airy, avec de multiple rebonds. Selon une variante, l'écart temporel entre la première et seconde impulsion est supérieur à la durée de vie du plasma de charges libres dans le matériau mais inférieure au temps de relaxation thermique.

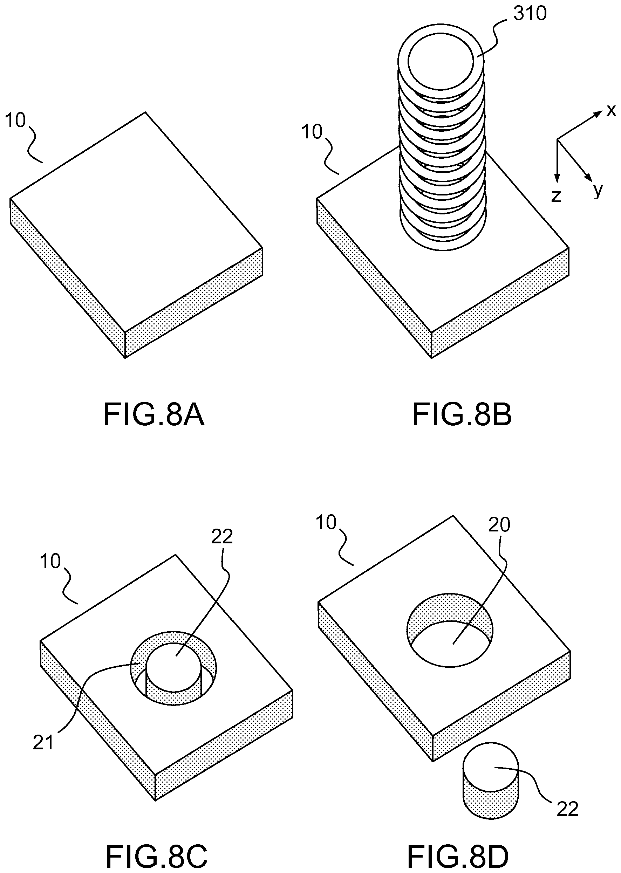

Les figures 8 à 10 illustrent différentes applications de la méthode de micro-usinage selon la présente description.

Les figures 8A à 8E illustrent une première application de la méthode au micro-perçage pour la réalisation de trous traversant de diamètres supérieurs ou de l'ordre de grandeur du micron.

La figure 8A illustre la pièce 10 avant l'opération d'ablation. Le matériau dont est formé l'échantillon est par exemple une lame de verre de quelques dizaines de micromètres d'épaisseur et les trous à réaliser ont par exemple un diamètre de quelques microns, voire quelques dizaines de micromètres.

Selon une variante, pour limiter la déposition de débris après ablation ou pour permettre une adaptation d'indice linéaire et/ou d'indice non-linéaire afin de réduire la déformation du faisceau à la traversée de l'interface air/verre, la pièce peut être « préparée » avant l'opération de perçage, par exemple par dépôt sur la ou les surfaces de la pièce à percer d'une couche de polymère qui pourra être enlevée après perçage par nettoyage chimique.

L'opération de perçage est réalisée de préférence à l'air libre, ou, selon une variante, dans l'eau ou dans un milieu liquide pour soit limiter la déposition de débris après ablation ou réaliser l'adaptation d'indice susmentionnée, ou encore, en régime d'ablation multi-impulsionnel, de permettre un perçage progressif en face arrière.

La figure 8B illustre l'illumination de l'échantillon par une ou plusieurs impulsions, mises en forme spatialement pour former après focalisation un faisceau non diffractant focalisé selon un cylindre de focalisation 310, l'intensité lumineuse des impulsions étant adaptée pour générer par exemple l'ablation du matériau dans un volume de l'échantillon situé sur la surface latérale du cylindre de focalisation.

La figure 8C montre la portion ablatée 21 du matériau, qui présente une forme cylindrique évidée. Le cylindre 22 non ablaté au centre est encore présent en fin d'ablation.

La figure 8D illustre la dernière étape de la méthode, dans laquelle le cylindre de matériau restant 22 est évacué, éventuellement par gravité sous son propre poids.

La pièce à réaliser est par exemple illustrée sur la figure 8E et comprend un échantillon 10 percé de plusieurs trous $20_i$ de section circulaire dans le matériau.

Il est également possible d'évacuer le cylindre 22 grâce à un jet d'air ou de liquide, ou via une dépression exercée sur une face de la pièce à percer. Alternativement, il est possible d'évacuer le cylindre 22 grâce à un nettoyage dans un bain à ultrasons ou grâce à une attaque chimique, choisie en fonction du matériau à ablater. Par exemple pour la silice fondue ou les verres, il peut être avantageux d'éliminer le cylindre de matériau restant 22 par une attaque chimique à l'acide fluorhydrique (HF) ou par une attaque chimique à l'hydroxyde de potassium (KOH), éventuellement couplé à un nettoyage comme mentionné dans les points précédents.

En ce qui concerne le perçage proprement dit (figures 8B, 8C), plusieurs stratégies peuvent être mises à profit.

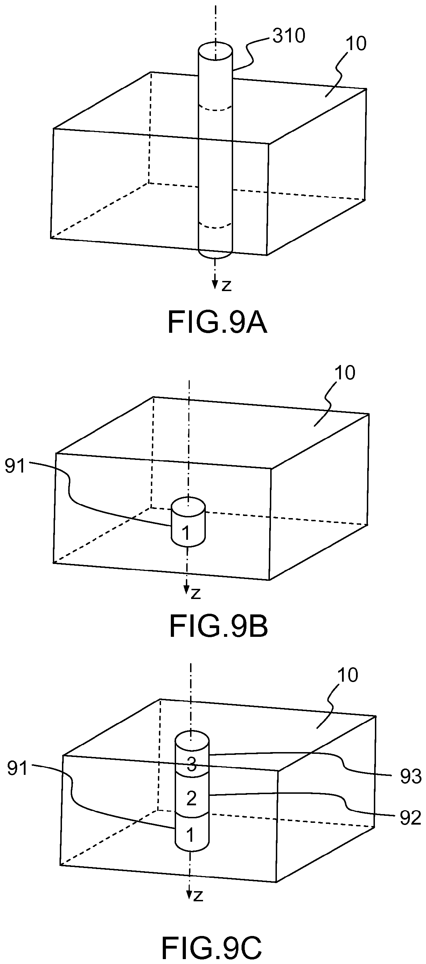

Selon une première variante illustrée sur la figure 9A, la pièce à percer est placée approximativement au centre du faisceau Bessel vortex, et un ou plusieurs tirs laser sont émis pour induire un dommage dans la pièce, soit sous forme d'une première impulsion unique de puissance lumineuse suffisante, soit sous forme d'un train de premières impulsions, soit sous forme d'une succession de premières et secondes impulsions présentant des caractéristiques temporelles différentes, comme cela a été décrit précédemment, notamment au vu des figures 7A, 7B.

Dans le cas d'un échantillon épais, c'est-à-dire plus épais que la longueur de diffraction du faisceau de Bessel-Vortex, plusieurs variantes sont possibles. Selon un premier exemple, la pièce est déplacée longitudinalement selon l'axe du cylindre de focalisation. Selon un deuxième exemple illustré par les figures 9B et 9C, la pièce à percer peut être illuminée par une séquence de tirs à différentes positions longitudinales.

La figure 9B illustre ainsi la génération d'un premier faisceau de Bessel-Vortex 91 d'axe longitudinal Z et la figure 9C illustre la génération de deux autres faisceaux 92, 93 de type Bessel vortex générés séparément, puis superposés sur le même axe Z avec un décalage longitudinal. Le dommage est réalisé dans ce cas sans déplacement de la pièce, et par plusieurs illuminations laser venant de ces différents faisceaux. Notons que cette deuxième stratégie est avantageuse car elle permet d'éviter les problèmes éventuels dus à la différence de seuil de dommage entre la surface et le coeur de la pièce à percer.

D'autres variantes sont envisagées pour le micro-perçage.

Par exemple, la pièce à percer peut, de façon avantageuse, subir entre deux tirs laser une rotation autour de l'axe du faisceau, de façon à homogénéiser le dommage induit.

Pour réaliser plusieurs perçages sur une même pièce, il est possible de translater la pièce entre chaque site ou de réaliser l'ablation de plusieurs sites en même temps grâce à un dispositif permettant de générer des faisceaux Bessel vortex en parallèle. Cette solution peut avantageusement être obtenue par le biais d'hologrammes dits 'multiplexes'.

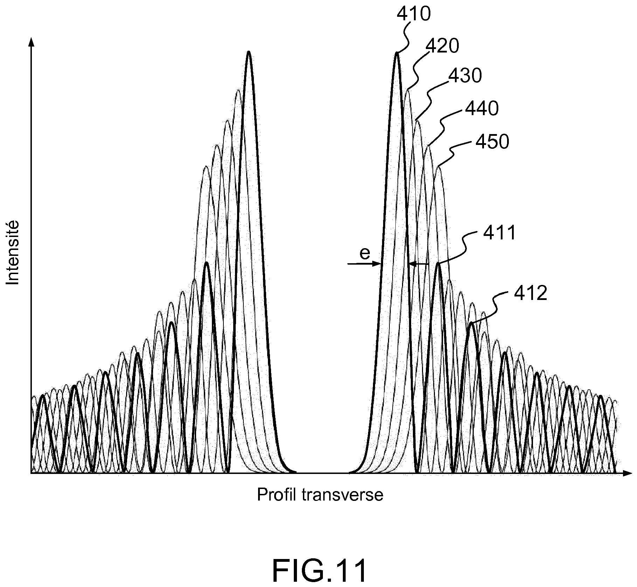

Pour la réalisation par exemple de trous de grands diamètres (typiquement supérieurs à quelques dizaines de microns), plusieurs tirs laser peuvent être réalisés sur le même site de la pièce à percer, mais en utilisant des paramètres légèrement différents pour les faisceaux Bessel vortex, afin de générer des dommages sur des cylindres concentriques de diamètres différents. Ces faisceaux à différents paramètres peuvent être réalisés soit avec différents moyens de production de faisceau soit en variant les paramètres entre chaque illumination ou chaque séquence d'illuminations de plusieurs sites. La figure 11 illustre ainsi différents profils d'intensité pour des faisceaux de Bessel-Vortex présentant des charges topologiques comprises entre 6 et 10 et dont les profils d'intensité sont respectivement référencés 410, 420, 430, 440, 450. Avantageusement, l'ablation est réalisée en commençant par le faisceau définissant le cylindre d'ablation de rayon le plus faible, puis en augmentant progressivement le rayon du cylindre d'ablation. En effet, sur le cylindre d'ablation, le matériau devient opaque ou fortement diffusant et bloque la propagation de la lumière vers un cylindre de rayon plus faible.

Dans le cas de perçage de trous de grand diamètre, il est également possible de procéder par « fraisage ». Dans ce cas, la méthode comprend par exemple le déplacement d'un cylindre de focalisation autour de la zone à évider.

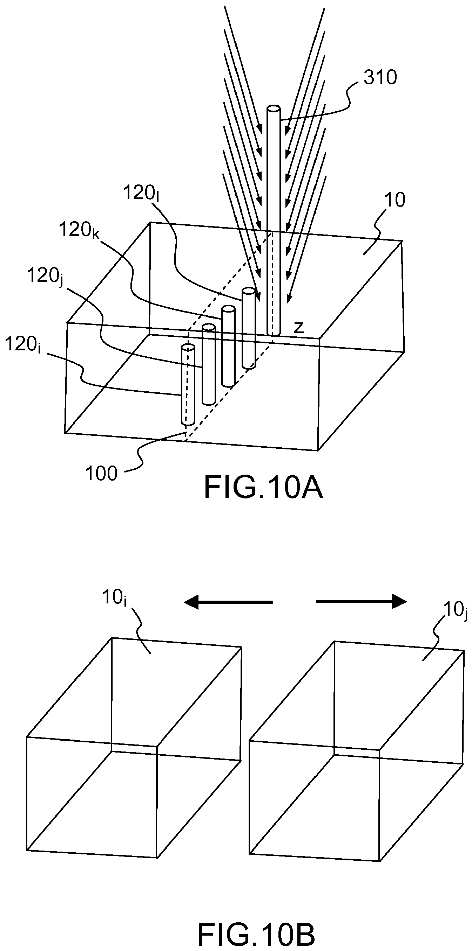

Les figures 10A et 10B illustrent une autre application de la méthode selon la présente description pour le clivage d'un échantillon, par exemple une plaque en matériau diélectrique de type plaque de verre ou un wafer en matériau semi-conducteur.

Un échantillon 10 est illuminé par exemple au moyen d'un faisceau de type Bessel-Vortex 310 tel que décrit précédemment, et l'échantillon est déplacé par rapport au faisceau de telle sorte à créer une modification des propriétés physico-chimique du matériau dans des volumes $120_i$, $120_j$, $120_k$, $120_l$, situés sur la surface latérale du cylindre de focalisation (figure 10A). Ces modifications du matériau induisent une zone de contraintes sur un plan vertical 100, entrainant la fragilisation du matériau et le clivage au niveau de ce plan (figure 10B). Ce plan d'illumination peut avantageusement être incliné pour réaliser des découpes avec des bords biseautés. D'excellentes qualités de surface peuvent ainsi être obtenues (planéité meilleure que lambda/20 typiquement).

Bien que décrite à travers un certain nombre d'exemples de réalisation détaillés, le procédé et le dispositif de micro-usinage par laser selon l'invention comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

**Revendications**

1. Dispositif de micro-usinage par laser d'un échantillon (10) en matériau donné, comprenant :

   - des moyens d'émission (601-602, 701-702) d'au moins une première impulsion lumineuse ($I_1$) ;

   le dispositif étant **caractérisé en ce qu'**il comprend en outre :

   - un module de focalisation (603, 703) permettant de générer à partir d'un faisceau incident donné un faisceau non diffractant focalisé selon un cylindre de focalisation généralement orientée selon l'axe optique du module de focalisation;

   et **en ce que** lesdits moyens d'émission (601-602, 701-702) d'au moins une première impulsion lumineuse ($I_1$) sont aptes à générer, après focalisation par ledit module de focalisation dans l'échantillon, un plasma de charges libres par absorption multiphotonique dans un volume de l'échantillon situé sur la surface latérale dudit cylindre de focalisation.

2. Dispositif selon la revendication 1, dans lequel ladite première impulsion lumineuse présente une durée inférieure à 100 picosecondes.

3. Dispositif selon l'une quelconque des revendications précédentes, dans lequel lesdits moyens d'émission permettent l'émission d'une première impulsion lumineuse ou d'un train de premières impulsions lumineuses de puissance optique donnée, supérieure à une première puissance optique seuil, ladite première puissance optique seuil étant suffisante pour entraîner une modification des propriétés physicochimiques du matériau à l'endroit de formation du plasma.

4. Dispositif selon la revendication 3, dans lequel ladite puissance optique est supérieure à une deuxième puissance optique seuil suffisante pour entraîner une ablation du matériau à l'endroit de formation du plasma.

5. Dispositif selon l'une quelconque des revendications 1 ou 2, dans lequel les moyens d'émission permettent l'émission d'au moins une seconde onde électromagnétique ($I_2$) destinée à être superposée spatialement à l'endroit de formation du plasma.

6. Dispositif selon la revendication 5, dans lequel lesdits moyens d'émission comprennent une source laser unique (701) et un module de mise en forme temporel (702) permettant de générer à partir de l'onde lumineuse émise par ladite source laser une première et au moins une seconde impulsion lumineuse.

7. Dispositif selon l'une quelconque des revendications précédentes, dans lequel le module de focalisation permet de générer un faisceau présentant une distribution de l'intensité annulaire dans l'espace des fréquences spatiales et une phase dans l'espace des fréquences spatiales de type $\Phi(k_r, \theta) = N\theta$ où ($k_r, \theta$) sont les coordonnées cylindriques et N est un entier relatif non nul.

8. Dispositif selon l'une quelconque des revendications précédentes, dans lequel le module de focalisation permet de former simultanément, après focalisation dans ledit échantillon, une pluralité de cylindres de focalisation.

9. Dispositif selon l'une quelconque des revendications précédentes, comprenant en outre un module de mise en forme de la polarisation des impulsions émises par les moyens d'émission.

10. Dispositif selon l'une quelconque des revendications précédentes, comprenant en outre des moyens d'évacuation du matériau contenu à l'intérieur du cylindre de focalisation.

**11.** Méthode de micro-usinage par laser d'un échantillon (10) en matériau présentant une bande de transparence donnée, comprenant :

- l'émission (101) d'au moins une première impulsion de bande spectrale comprise dans la bande de transparence dudit matériau;

la méthode étant **caractérisée en ce qu'**elle comprend en outre :

- la mise en forme spatiale (103) de ladite première impulsion permettant de former après focalisation dans ledit échantillon un faisceau non diffractant focalisé selon un cylindre de focalisation, l'intensité lumineuse dudit faisceau non diffractant permettant de générer un plasma de charges libres par absorption multi-photonique dans un volume de l'échantillon situé sur la surface latérale dudit cylindre de focalisation.

**12.** Méthode selon la revendication 11, comprenant l'émission d'une première impulsion lumineuse ou d'un train de premières impulsions lumineuses de puissance optique suffisante pour entraîner une modification des propriétés physico-chimiques du matériau à l'endroit de formation du plasma.

**13.** Méthode selon la revendication 12, dans laquelle ladite puissance optique est suffisante pour entraîner l'ablation du matériau à l'endroit de formation du plasma.

**14.** Méthode selon la revendication 11, comprenant en outre :

- l'émission d'au moins une seconde onde électromagnétique de bande spectrale comprise dans la bande de transparence dudit matériau, superposée spatialement à l'endroit de formation du plasma pour générer un échauffement dudit matériau par absorption par les charges libres du plasma.

**15.** Méthode selon l'une quelconque des revendications 11 à 14 appliquée au micro-perçage d'un échantillon en matériau donné pour la formation d'au moins un trou traversant, comprenant :

- le contrôle du diamètre du trou traversant par le contrôle des paramètres de mise en forme spatiale de la première impulsion lumineuse ; et
- le contrôle de la position relative de l'échantillon et du faisceau non-diffractant.

**16.** Méthode selon la revendication 15, comprenant en outre :

- l'évacuation du matériau contenu à l'intérieur du cylindre de focalisation pour former ledit trou traversant.

**17.** Méthode selon l'une quelconque des revendications 11 à 14 appliquée au clivage d'un échantillon, comprenant :

- le déplacement du faisceau non-diffractant le long d'un plan de clivage (100).

**Patentansprüche**

**1.** Vorrichtung zur Lasermikrobearbeitung einer Probe (10) aus einem bestimmten Material, die umfasst:

- Mittel zum Aussenden (601-602, 701-702) von mindestens einem ersten Lichtimpuls ($I_1$);

wobei die Vorrichtung **dadurch gekennzeichnet ist, dass** sie ferner umfasst:

- ein Fokussierungsmodul (603, 703), das es ermöglicht, ausgehend von einem bestimmten einfallenden Strahl einen nicht diffraktiven Strahl zu erzeugen, fokussiert entlang einem Fokussierzylinder, der im Allgemeinen entlang der optischen Achse des Moduls ausgerichtet ist;

und dass die besagten Mittel zum Aussenden (601-602, 701-702) von mindestens einem ersten Lichtimpuls ($I_1$) geeignet sind, nach Fokussierung durch das besagte Fokussierungsmodul (603, 703) in der Probe, ein Plasma freier Ladungen durch multiphotonische Absorption in einem Volumen der Probe, angeordnet auf der seitlichen Oberfläche des besagten Fokussierzylinders, zu erzeugen.

**2.** Vorrichtung nach Anspruch 1, in welcher der besagte erste Lichtimpuls eine Dauer von weniger als 100 Picosekunden aufweist.

**3.** Vorrichtung nach einem der vorstehenden Ansprüche, in welcher die besagten Mittel zum Aussenden das Aussenden eines ersten Lichtimpulses oder einer Abfolge erster Lichtimpulse von bestimmter optischer Leistung, die über einer ersten optischen Leistungsschwelle liegt, ermöglichen, wobei die besagte erste optische Leistungsschwelle ausreichend ist, um eine Änderung der physikalischchemischen Eigenschaften des Materials am Entstehungsort des Plasmas herbeizuführen.

**4.** Vorrichtung nach Anspruch 3, in welcher die besagte optische Leistung über einer zweiten optischen Leistungsschwelle liegt, die ausreicht, um eine Abtragung des Materials am Entstehungsort des Plasmas herbeizuführen.

5. Vorrichtung nach einem der Ansprüche 1 oder 2, in welcher die Mittel zum Aussenden das Aussenden von mindestens einer zweiten elektromagnetischen Welle (I$_2$) ermöglichen, die dazu bestimmt ist, den Entstehungsort des Plasmas räumlich zu überlagern.

6. Vorrichtung nach Anspruch 5, in welcher die besagten Mittel zum Aussenden eine einzige Laserquelle (701) und ein Modul zur temporären Formung (702) umfassen, die es ermöglichen, ausgehend von der durch die besagte Laserquelle ausgesendete Lichtwelle einen ersten und mindestens einen zweiten Lichtimpuls zu erzeugen.

7. Vorrichtung nach einem der vorstehenden Ansprüche, in welcher das Fokussierungsmodul es ermöglicht, einen Strahl zu erzeugen, der eine Verteilung der ringförmigen Intensität im Raum der räumlichen Frequenzen und eine Phase im Raum der räumlichen Frequenzen vom Typ Φ (k$_r$, θ) aufweist, wo (k$_r$, θ) die zylindrischen Koordinaten sind und N eine relative ganze Zahl ungleich Null ist.

8. Vorrichtung nach einem der vorstehenden Ansprüche, in welcher das Fokussierungsmodul es ermöglicht, nach Fokussierung in der besagten Probe, gleichzeitig eine Vielzahl an Fokussierzylindern zu formen.

9. Vorrichtung nach einem der vorstehenden Ansprüche, die unter anderem ein Modul zur Formung der Polarisation der durch die Mittel zum Aussenden ausgesendeten Impulse umfasst.

10. Vorrichtung nach einem der vorstehenden Ansprüche, die unter anderem Mittel zum Abführen des im Innern des Fokussierzylinders enthaltenen Materials umfasst.

11. Verfahren zur Lasermikrobearbeitung einer Probe (10) aus einem Material, das einen bestimmten Transparenzstreifen aufweist, welches umfasst:

- das Aussenden (101) von mindestens einem ersten Spektralband-Impuls, bestehend aus dem Transparenzstreifen des besagten Materials,

wobei das Verfahren **dadurch gekennzeichnet ist, dass** es ferner umfasst:

- die räumliche Formung (103) des besagten ersten Impulses, der es ermöglicht, nach Fokussierung in der besagten Probe einen nicht diffraktiven Strahl zu formen, der entlang einem Fokussierzylinder fokussiert ist, wobei die Lichtintensität des besagten nicht diffraktiven Strahls es ermöglicht, ein Plasma freier Ladungen durch multiphotonische Absorption in einem Volumen der Probe, angeordnet auf der seitlichen Oberfläche des besagten Fokussierzylinders, zu erzeugen.

12. Verfahren nach Anspruch 11, umfassend das Aussenden eines ersten Lichtimpulses oder einer Abfolge erster Lichtimpulse von einer optischen Leistung, die ausreichend ist, um eine Änderung der physiko-chemischen Eigenschaften des Materials am Entstehungsort des Plasmas herbeizuführen.

13. Verfahren nach Anspruch 12, in welchem die besagte optische Leistung ausreichend ist, um das Abtragen des Materials am Entstehungsort des Plasmas herbeizuführen.

14. Verfahren nach Anspruch 11, das unter anderem umfasst:

- das Aussenden von mindestens einer zweiten elektromagnetischen Spektralband-Welle, die in dem Transparenzstreifen des besagten Materials enthalten ist, die den Entstehungsort des Plasmas räumlich überlagert, um eine Erwärmung des besagten Materials durch Absorption durch die freien Ladungen des Plasmas zu erzeugen.

15. Verfahren nach einem der vorstehenden Ansprüche 11 bis 14, angewandt auf das Mikro-Bohren einer Probe aus einem bestimmten Material zur Formung von mindestens einer Durchgangsbohrung, welches umfasst:

- die Kontrolle des Durchmessers der Durchgangsbohrung durch Überprüfung der Parameter räumlicher Formung des ersten Lichtimpulses, und
- die Kontrolle der relativen Position der Probe und des nicht diffraktiven Strahls.

16. Verfahren nach Anspruch 15, das unter anderem umfasst:

- das Abführen des im Innern des Fokussierzylinders zur Formung der besagten Durchgangsbohrung enthaltenen Materials.

17. Verfahren nach einem der Ansprüche 11 bis 14, angewandt auf die Spaltung einer Probe, welches umfasst:

- die Verlagerung des nicht diffraktiven Strahls entlang einer Spaltungsebene (100).

**Claims**

1. A device for laser micromachining of a sample (10) made of a given material, comprising:

    - means of emission (601-602, 701-702) of at least one first light pulse ($I_1$) ;

    the device being **characterized in that** it further comprises:

    - a focusing module (603, 703) allowing the generation, starting from a given incident beam, of a non-diffracting beam focused according to a focusing cylinder generally oriented along the optical axis of the focusing module;

    and **in that** said means of emission (601-602, 701-702) of at least one first light pulse ($I_1$) are designed to generate, after focusing by said focusing module in the sample, a plasma of free charges by multi-photonic absorption in a volume of the sample situated on the lateral surface of said focusing cylinder.

2. The device as claimed in claim 1, in which said first light pulse has a duration of less than 100 picoseconds.

3. The device as claimed in any one of the preceding claims, in which said emission means allow the emission of a first light pulse or of a train of first light pulses of given optical power, higher than a first optical power threshold, said first optical power threshold being sufficient for causing a modification of the physico-chemical properties of the material at the location of formation of the plasma.

4. The device as claimed in claim 3, in which said optical power is higher than a second optical power threshold sufficient for causing an ablation of the material at the location of formation of the plasma.

5. The device as claimed in either one of claims 1 and 2, in which the emission means allow the emission of at least a second electromagnetic wave ($I_2$) designed to be spatially superposed at the location of formation of the plasma.

6. The device as claimed in claim 5, in which said emission means comprise a single laser source (701) and a temporal shaping module (702) allowing a first and at least a second light pulse to be generated starting from the light wave emitted by said laser source.

7. The device as claimed in any one of the preceding claims, in which the focusing module allows a beam to be generated having an annular distribution of the intensity in the space of the spatial frequencies and a phase in the space of the spatial frequencies of the type $\Phi(k_r, \theta) = N\theta$, where $(k_r, \theta)$ are the cylindrical coordinates and N is a relative non-zero integer.

8. The device as claimed in any one of the preceding claims, in which the focusing module allows, after focusing in said sample, a plurality of focusing cylinders to be formed simultaneously.

9. The device as claimed in any one of the preceding claims, furthermore comprising a module for conditioning the polarization of the pulses emitted by the emission means.

10. The device as claimed in any one of the preceding claims, furthermore comprising means for evacuating the material contained inside the focusing cylinder.

11. A method for laser micromachining of a sample (10) made of a material having a given transparency band, comprising:

    - the emission (101) of at least a first pulse with a spectral band included within the transparency band of said material;

    the method being **characterized in that** it further comprises:

    - the spatial shaping (103) of said first pulse allowing, after focusing in said sample, a non-diffracting beam to be formed focused according to a focusing cylinder, the light intensity of said non-diffracting beam allowing a plasma of free charges to be generated by multi-photonic absorption within a volume of the sample situated on the lateral surface of said focusing cylinder.

12. The method as claimed in claim 11, comprising the emission of a first light pulse or of a train of first light pulses with an optical power sufficient to cause a modification of the physico-chemical properties of the material at the location of formation of the plasma.

13. The method as claimed in claim 12, in which said optical power is sufficient for causing the ablation of the material at the location of formation of the plasma.

14. The method as claimed in claim 11, furthermore comprising:

- the emission of at least a second electromagnetic wave with a spectral band included within the transparency band of said material, spatially superposed at the location of formation of the plasma so as to generate a heating up of said material by absorption by the free charges of the plasma.

15. The method as claimed in any one of claims 11 to 14 applied to the micro-drilling of a sample made of a given material for the formation of at least one through-hole, comprising:

- the control of the diameter of the through-hole by the control of the spatial shaping parameters of the first light pulse; and
- the control of the relative position of the sample and the non-diffracting beam.

16. The method as claimed in claim 15, furthermore comprising:

- the evacuation of the material contained inside the focusing cylinder in order to form said through-hole.

17. The method as claimed in any one of claims 11 to 14 applied to the cleaving of a sample, comprising:

- the displacement of the non-diffracting beam along a cleaving plane (100).

101 — Laser(s)

102 — mise en forme temporelle

103 — mise en forme spatiale

104 — mise en forme en polarisation

106 —

10

105 — préparation de la pièce à percer

107 — nettoyage de la pièce après perçage

## FIG.1

FIG.2

FIG.4A

FIG.3

FIG.3

FIG.4B

FIG.5

FIG.6

FIG.8E

FIG.8A

FIG.8B

FIG.8C

FIG.8D

FIG.7A

FIG.7B

FIG.9A

FIG.9B

FIG.9C

FIG.10A

FIG.10B

FIG.11

## RÉFÉRENCES CITÉES DANS LA DESCRIPTION

**Documents brevets cités dans la description**

- JP 2006272384 A

**Littérature non-brevet citée dans la description**

- **M.K. BHUYAN et al.** High aspect ratio nanochannel machining using single shot femtosecond Bessel beams. *Appl. Phys. Lett.,* 2010, vol. 97, 081102

- **V. JARUTIS et al.** Focusing of Laguerre-Gaussian beams by axicon. *Optics Communication,* 2000, vol. 184, 105-112
- **M. BERESNA et al.** Polarization sensitive elements fabricated by femtosecond laser nanostructuring of glass. *Optical Material Express,* 2011, vol. 1 (4